# EUROPEAN PATENT SPECIFICATION

(11) **EP 3 614 754 B1**
(45) Date of publication and mention of the grant of the patent: **21.09.2022**
(21) Application number: 17913087.7
(22) Date of filing: 09.06.2017
(51) Int. Cl.: H04W 68/00, H04W 88/04

(54) **PAGING MESSAGE SENDING METHOD AND PAGING MESSAGE RECEIVING METHOD**
FUNKRUFNACHRICHTENSENDEVERFAHREN UND FUNKRUFNACHRICHTENEMPFANGSVERFAHREN
PROCÉDÉ D'ENVOI DE MESSAGE DE RADIOMESSAGERIE ET PROCÉDÉ DE RÉCEPTION DE MESSAGE DE RADIOMESSAGERIE

(43) Date of publication of application: 26.02.2020
(73) Proprietor: Huawei Technologies Co., Ltd., Shenzhen, Guangdong 518129 (CN)
(72) Inventor: CAI, Yu, Shenzhen Guangdong 518129 (CN); WANG, Jian, Shenzhen Guangdong 518129 (CN); ZENG, Yongbo, Shenzhen Guangdong 518129 (CN)
(74) Representative: Grünecker Patent- und Rechtsanwälte PartG mbB
(86) International application number: PCT/CN2017/087819
(87) International publication number: WO 2018/223401

(56) References cited:
- WO-A1-2016/161649
- CN-A- 103 491 647
- CN-A- 104 080 075
- CN-A- 104 854 924
- CN-A- 105 376 770
- CN-A- 106 797 635
- US-A1- 2013 005 364
- SONY: "Paging via Relay", 3GPP DRAFT; R2-1704824 FED2D PAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275341, Retrieved from the Internet: URL:http://www.3gpp.org/ftp/Meetings_3GPP_ SYNC/RAN2/Docs/ [retrieved on 2017-05-14]
- NOKIA ET AL: "Further discussion on Paging relaying", 3GPP DRAFT; R2-1704327_D2D_PAGING_DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051274902, Retrieved from the Internet: URL:http://www.3gpp.org/ftp/Meetings_3GPP_ SYNC/RAN2/Docs/ [retrieved on 2017-05-14]
- HUAWEI et al.: "Further Discussion on the Paging Receiving via Relay UE", 3GPP TSG-RAN WG2 Meeting #98, R2-1705302, 19 May 2017 (2017-05-19), XP051263996,

## Description

### TECHNICAL FIELD

This application relates to the field of communications technologies, and in particular, to paging message sending and receiving methods.

### BACKGROUND

Device-to-device (Device-to-Device, D2D) communication based on a cellular network, also referred to as a proximity service (Proximity Service, ProSe) in the 3rd generation partnership project (3rd Generation Partnership Project, 3GPP), is a new technology in which under the control of a system, user equipments (User Equipment, UE) are allowed to directly communicate with each other by multiplexing cell resources. A remote (Remote) UE may be connected to a base station. When the remote UE has no service to transmit or receive, the remote UE is in an idle (Idle) state. When the remote UE is connected to the base station, if the base station is to send a service to the remote UE, the base station needs to page the remote UE. The remote UE wakes up at a paging moment of the remote UE to detect whether there is a paging message. If the remote UE receives a paging message, the remote UE connects to the base station or performs another corresponding operation. If no paging message is received, the remote UE continues to sleep.

In a conventional technical solution, a paging message sent by an eNodeB (eNodeB, eNB) to remote UE usually includes a paging record list (Paging Record List), a system information modification (System Info Modification) indication, earthquake and tsunami warning system (Earthquake Tsunami Warning System, ETWS) indication information, and the like. The paging record list includes a plurality of paging records. Each paging record includes a remote UE-identity (identity) and a cn-domain name (Domain) indication. The remote UE receives the paging message sent by the eNB, and determines that the eNB is paging the remote UE when determining that a UE-identity in a paging record is the same as an identity of the remote UE. Usually, the UE-identity sent by the eNB to the remote UE includes two forms: an S-temporary mobile subscriber identity (S-Temporary Mobile Subscriber Identity, S-TMSI) and an international mobile subscriber identity (International Mobile Subscriber Identity, IMSI). During normal paging, the eNB usually pages the remote UE by using the S-TMSI, and during abnormal paging, the eNB pages the remote UE by using the IMSI.

However, an S-TMSI of remote UE occupies a total of 40 bits (bit), and an IMSI of remote UE is 6 to 21 decimal digits 0 to 9. If a paging message is used to page a plurality of remote UEs, signaling overheads of the paging message received by remote UE are relatively high.

Sony discloses in "Paging via Relay", 3GPP Draft, R2-170824 FED2D Paging, vol. RAN WG2, no. Hangzhou, China, 14 May 2017, methods for performing paging to a remote device via a relay device based on a paging identity given by IMSI or P-TMSI of the remote device. US 2013/005364 A1 discloses paging of a mobile station wherein a unique identifier of the mobile station that is to be paged is hashed into a first group of hashed values and at least a second group of hashed values, the first group of hashed values being used by page message generator to generate a page on a first paging channel and the second group of values being used by a page message generator to generate a page on a second paging channel. All of the bits of the unique identifier are sent to page the mobile station. The mobile station determines therefrom whether the mobile station has been paged. WO 2016/161649 A1 discloses a paging message transmission method including determining indication information included in a first paging message, where the indication information is used to instruct user equipment UE to receive the first paging message and/or receive a second paging message; sending the first paging message including the indication information, where the first paging message is included in a first transport block; and sending the second paging message if the indication information instructs the user equipment to receive the second paging message, where the second paging message is included in a second transport block, and the second transport block and the first transport block are different transport blocks that are separately transmitted.

### SUMMARY

Embodiments of this application provide paging message sending and receiving methods, a terminal, and a system, to reduce signaling overheads of a paging message, thereby reducing power consumption of a terminal.

A first aspect of the invention comprises a paging message sending method as set forth in claim 1. This method comprises:
determining, by a first terminal, that a second terminal is paged, the second terminal being connected to a network side device by using the first terminal; and
sending, by the first terminal, a first message to the second terminal, wherein the first message is configured to enable the second terminal to determine that the second terminal is paged;
wherein the first message comprises a first identifier, wherein a respective quantity of bits occupied by the first identifier is less than a quantity of bits occupied by an S-temporary mobile subscriber identity, S-TMSI, and an international mobile subscriber identity, IMSI, that are configured to be used by the network side device for paging
the second terminal, wherein the first identifier is configured to enable the second terminal to determine that the second terminal is paged;
wherein the first identifier is an identifier allocated by the first terminal to the second terminal on a time resource for paging the second terminal; or
the first identifier is a proximity service terminal identifier, ProSe UE ID, of the second terminal;
wherein the first message further comprises a first indication, and the first indication is used to indicate a paging type;
wherein the paging type is that the network side device pages the second terminal by using an S-temporary mobile subscriber identity, S-TMSI, or an international mobile subscriber identity, IMSI.

A second aspect of the invention comprises a paging message receiving method as set forth in claim 2. This method comprises:
receiving, by a second terminal, a first message sent by a first terminal, the second terminal being connected to a network side device by using the first terminal, wherein the first message is configured to enable the second terminal to determine that the second terminal is paged; and
determining, by the second terminal based on the first message, that the second terminal is paged;
wherein the first message comprises a first identifier, wherein a quantity of bits occupied by the first identifier is less than a respective quantity of bits occupied by an S-temporary mobile subscriber identity, S-TMSI, and an international mobile subscriber identity, IMSI, that are configured to be used by the network side device for paging
the second terminal, wherein the first identifier is used by the second terminal to determine that the second terminal is paged; and the determining, by the second terminal based on the first message, whether the second terminal is paged comprises: determining, by the second terminal, that the second terminal is paged if determining that the first identifier is the same as an identifier of the second terminal;
wherein the first identifier is an identifier allocated by the first terminal to the second terminal on a time resource for paging the second terminal; or
the first identifier is a proximity service terminal identifier, ProSe UE ID, of the second terminal;
wherein the first message further comprises a first indication, and the first indication is configured to indicate a paging type;
wherein the paging type is that a network side device pages the second terminal by using an S-temporary mobile subscriber identity, S-TMSI, or an international mobile subscriber identity, IMSI.

### BRIEF DESCRIPTION OF DRAWINGS

FIG. 1 is an architectural diagram of a communications system according to this application;
FIG. 2 is an architectural diagram of another communications system according to this application;
FIG. 3 is a schematic structural diagram of a first terminal according to this application;
FIG. 4 is a schematic structural diagram of a second terminal according to this application;
FIG. 5 is a first schematic flowchart of a paging message sending method according to this application;
FIG. 6 is a second schematic flowchart of a paging message sending method according to this application;
FIG. 7 is a third schematic flowchart of a paging message sending method according to this application;
FIG. 8 is a schematic structural diagram of a media access control control element according to this application;
FIG. 9 is a possible schematic diagram of content of sidelink control information according to this application;
FIG. 10 is another possible schematic diagram of content of sidelink control information according to this application;
FIG. 11 is a schematic structural diagram of another media access control control element according to this application;
FIG. 12 is a schematic structural diagram of a piece of sidelink shared information according to this application;
FIG. 13 is a schematic structural diagram of another piece of sidelink shared information according to this application;
FIG. 14 is a schematic structural diagram of another first terminal according to this application;
FIG. 15 is a schematic structural diagram of still another first terminal according to this application;
FIG. 16 is a schematic structural diagram of another second terminal according to this application; and
FIG. 17 is a schematic structural diagram of still another second terminal according to this application.

### DESCRIPTION OF EMBODIMENTS

To facilitate clear description of the technical solutions in the embodiments of the present invention, words such as "first" and "second" are used in the embodiments of the present invention to distinguish between same items or similar items that provide basically same functions or purposes. A person skilled in the art It may be understood that the words such as "first" and "second" do not limit a quantity and an execution order.

In a conventional technical solution, when paging one or more remote UEs, a base station usually sends, to the one or more remote UEs, a paging message (Paging message) carrying an S-TMSI or an IMSI. Because the S-TMSI or the IMSI occupies a relatively large quantity of bits, for example, an S-TMSI of remote UE occupies a total of 40 bits (bit), and an IMSI of remote UE is 6 to 21 decimal digits 0 to 9. In this case, if the base station needs to page 10 remote UEs by using S-TMSIs, a paging message occupies at least 400 bits. In addition, the remote UE is usually a low-capability device, for example, a smart wearable device, featuring a small size, a small battery capacity, and a relatively low radio frequency capability. Therefore, power consumed by the remote UE needs to be reduced, to prolong a standby time of the remote UE. Usually, a quantity of bits occupied by the paging message may be reduced to reduce signaling overheads of the paging message received by the remote UE and reduce occupied air interface resources, thereby improving a system capacity and reducing the power consumed by the remote UE.

In this application, a first terminal sends a first message to one or more second terminals connected to or associated with the first terminal, based on information (an S-temporary mobile subscriber identity S-TMSI, an international mobile subscriber identity IMSI, or other information that may be used by the first terminal to determine that a second terminal is paged by a network side device) that is about one or more paged second terminals (that is, remote UEs) and that is sent by the network side device, where the first message is used to instruct the one or more second terminals connected to or associated with the first terminal to determine that the second terminal is paged. The first message in this application is used to replace the S-TMSI or the IMSI in the conventional technical solution. This is because in an actual process, the first message can be used to page a plurality of paged second terminals, and a quantity of bits occupied by the first message can be reduced so that a quantity of bits occupied by information, in the first message, used by a second terminal to determine that the second terminal is paged is less than a quantity of bits occupied by the S-TMSI or the international mobile subscriber identity IMSI. In this way, signaling overheads of a paging message received by each second terminal can be reduced.

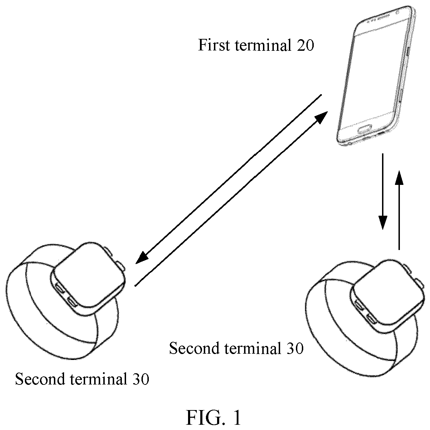

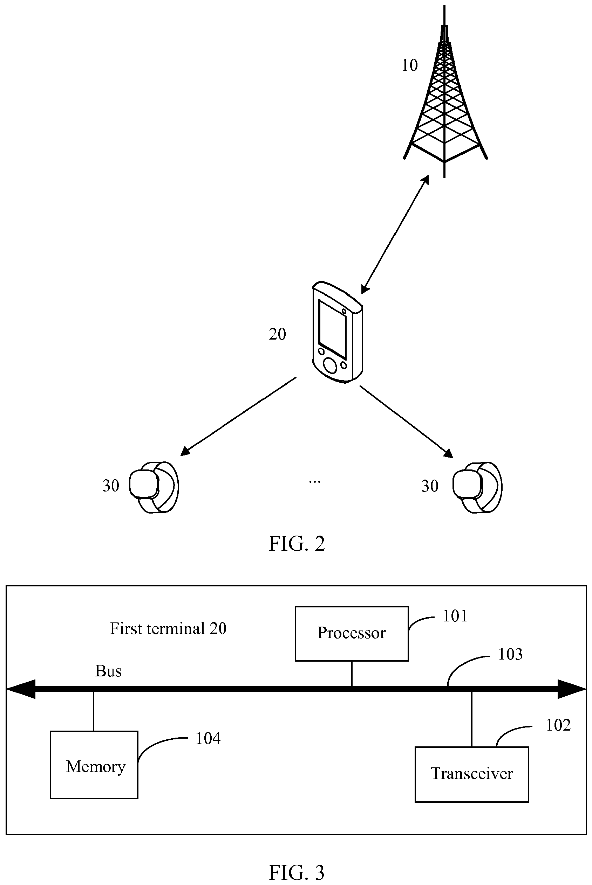

FIG. 1 and FIG. 2 are simplified schematic diagrams of a system architecture to which the embodiments of this application can be applied.

As shown in FIG. 1, in a first application scenario in the embodiments of this application, the system architecture may include a first terminal 20 and at least one second terminal 30.

The first terminal 20 may be connected to the second terminal 30 in a wired or wireless manner. When the first terminal 20 is connected to the second terminal 30 in a wireless manner, the two may be connected through any one of short-range wireless communications technologies such as Bluetooth (Bluetooth, BT), wireless fidelity (Wireless-Fidelity, Wi-Fi), a near field communication (Near Field Communication, NFC) technology, and infrared (Infrared). A manner of connecting the first terminal 20 to the second terminal 30 is not specifically limited in the embodiments of this application.

In the embodiments of the present invention, the first terminal 20 may be a mobile phone (for example, a cell phone), a mobile computer, a tablet computer, a personal digital assistant (Personal Digital Assistant, PDA), a media player, an electronic reader, a handheld gaming console, an in-vehicle electronic device, a cloud server, or the like. It may be understood that, the first terminal in this application has a function of assisting a low-capability device (for example, a smart wearable device) in connecting to a base station.

In the embodiments of the present invention, the second terminal 30 may be various smart wearable devices, for example, a smartwatch, smart glasses, and a smart band. Alternatively, the second terminal may be a machine-type communication (Machine-Type Communication, MTC) device or an Internet of Things (Internet of Things, IoT) device, for example, a smart meter or a smart water meter. The smart wearable device, the smart meter, the smart water meter, and the like may be connected to the base station by using the first terminal. In this way, power consumption of the smart wearable device, the smart meter, the smart water meter, and the like can be reduced, and transmission rates of the smart wearable device, the smart meter, the smart water meter, and the like can be improved.

The terminal (Terminal) in the embodiments of the present invention may also be referred to as user equipment.

In the first application scenario, the first terminal may page a second terminal by itself. For example, when determining that the first terminal needs to send data to a second terminal, the first terminal determines that the first terminal needs to page the second terminal.

As shown in FIG. 2, in a second application scenario in the embodiments of this application, the system architecture may further include a network side device 10. The network side device 10 may be an eNodeB (eNodeB, eNB) or a mobility management entity (Mobility Management Entity, MME). This application is described by using an example in which the network side device 30 is a base station.

A first message in this application is used by the network side device or the first terminal to page a second terminal.

In the second application scenario, a distance between one or more second terminals 30 and the first terminal 20 is far shorter than that between the one or more second terminals 30 and the network side device 10. Therefore, the one or more second terminals 30 may be connected to the network side device 10 (for example, a base station) by using the first terminal 20 through a terminal-to-network side device relay (UE to-network relay) operation included in device-to-device (Device to Device, D2D) communication. That is, the one or more second terminals 30 are connected to the network side device 10 by using the first terminal 20, to transmit data or establish a voice call service. Therefore, the first terminal 20 shown in FIG. 2 may be referred to as a relay (Relay) terminal, and the second terminal 30 may be referred to as a remote (Remote) terminal. The one or more second terminals 30 are linked (linked) to or associated (associated) with the first terminal 20.

In the second application scenario, when the network side device 10 needs to page the one or more second terminals 30, first, the network side device 10 may notify the first terminal 20 connected to the one or more second terminals 30, and then the first terminal 20 sends a first message to the one or more second terminals 30.

When the first terminal 20 is connected to the one or more second terminals 30 through a sidelink (Sidelink, SL), the first terminal 20 may send the first message to the one or more second terminals 30 on the sidelink, to page at least one of the one or more second terminals 30 that is paged by the network side device.

FIG. 3 is a schematic structural diagram of a first terminal according to this application. It can be learned from FIG. 3 that the first terminal 20 includes a processor 101, a transceiver 102, a memory 104, and a bus 103. The transceiver 102, the processor 101, and the memory 104 are connected to each other by using the bus 103. The bus 103 may be a PCI bus, an EISA bus, or the like. The bus may be classified into an address bus, a data bus, a control bus, and the like. For ease of representation, only one thick line is used to represent the bus in FIG. 3, but this does not mean that there is only one bus or only one type of bus.

The processor 101 is a control center of a target device, and may be a processor or may be a general term of a plurality of processing elements. For example, the processor 101 is a central processing unit (Central Processing Unit, CPU).

The memory 104 may be a read-only memory (Read-Only Memory, ROM) or another type of static storage device that can store static information and a static instruction, a random access memory (Random Access Memory, RAM) or another type of dynamic storage device that can store information and an instruction, or an electrically erasable programmable read-only memory (Electrically Erasable Programmable Read-Only Memory, EEPROM), a compact disc read-only memory (Compact Disc Read-Only Memory, CD-ROM), another compact disc storage medium, optical disc storage medium (including a compact disc, a laser disc, an optical disc, a digital versatile disc, a Blu-ray disc, or the like), or magnetic disk storage medium, another magnetic storage device, or any other medium that can be configured to carry or store expected program code in a form of an instruction or a data structure and that is accessible by a computer, but is not limited thereto. The memory 104 may independently exist and be connected to the processor 101 by using the bus 103. Alternatively, the memory 104 may be integrated with the processor 101.

The memory 104 is configured to store a software program used to perform solutions in this application, and the software program is controlled and executed by the processor 101. In the embodiments of this application, in the application scenarios shown in FIG. 1 and FIG. 2, the memory 104 is further configured to store identification information of the paged second terminal.

The transceiver 102 is configured to communicate with another device (for example, the second terminal 30 and/or the base station 10) or a communications network through, for example, an Ethernet interface, a radio access network (Radio Access Network, RAN) interface, or a wireless local area network (Wireless Local Area Networks, WLAN) interface. The transceiver 102 may include a receiving unit to implement a receiving function and a sending unit to implement a sending function.

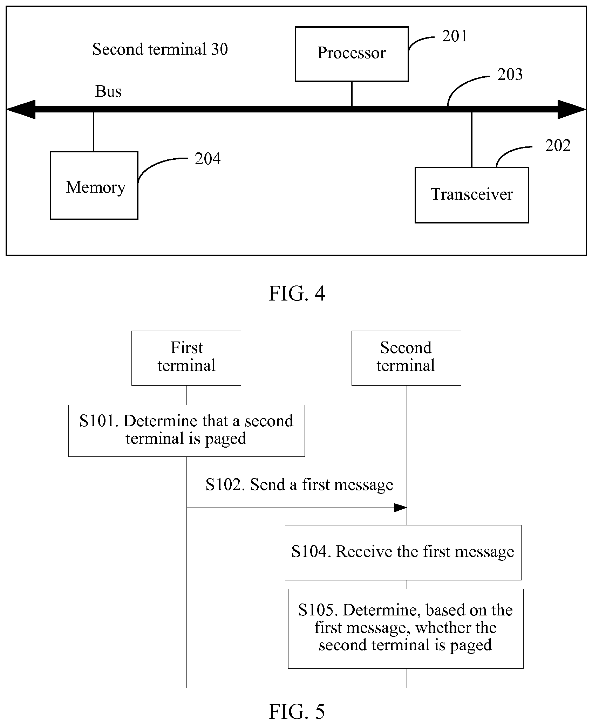

FIG. 4 is a schematic structural diagram of a second terminal according to this application. It can be learned from FIG. 4 that the second terminal 30 includes a processor 201, a transceiver 202, a memory 204, and a bus 203. The transceiver 202, the processor 201, and the memory 204 are connected to each other by using the bus 203. The bus 203 may be a PCI bus, an EISA bus, or the like. The bus may be classified into an address bus, a data bus, a control bus, and the like. For ease of representation, only one thick line is used to represent the bus in FIG. 4, but this does not mean that there is only one bus or only one type of bus. The memory 204 is configured to store program code and data of the second terminal 30. The transceiver 202 is configured to support the second terminal in communicating with another device (for example, the first terminal 20). The processor 201 is configured to support the second terminal 30 in executing the program code and the data stored in the memory 204 to implement a paging message receiving method provided in an embodiment of the present invention.

An external device is not limited to the device structures shown in FIG. 3 and FIG. 4. More or fewer components than those shown in the figures may be included, some components may be combined, or different component arrangements may be used.

FIG. 5 is a schematic flowchart of a paging message sending method according to this application. As shown in FIG. 5, the method includes the following steps.

S101. A first terminal determines that a second terminal is paged.

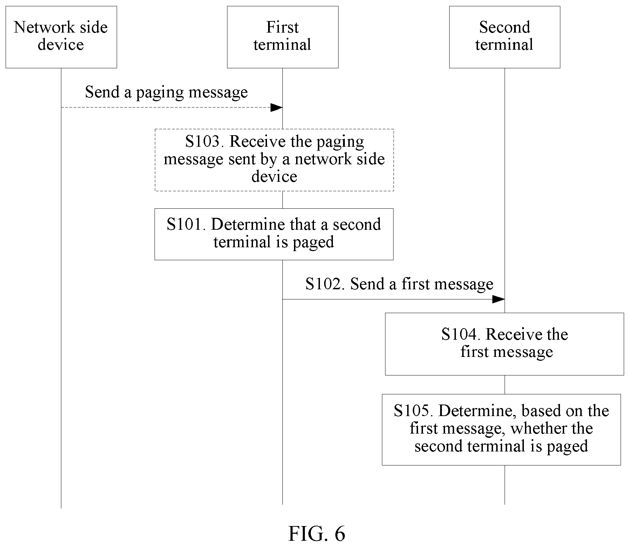

The first terminal may determine, based on a paging message sent by a network side device, that the second terminal is paged, or the first terminal may determine, based on a requirement, that the second terminal is paged. For example, when determining that the first terminal needs to send data to the second terminal, the first terminal determines that the second terminal is paged. When the first terminal determines, based on the received paging message, that the second terminal needs to be paged, as shown in FIG. 6, this application further includes step S103. The first terminal receives the paging message sent by the network side device to the first terminal, where the paging message includes information about one or more paged second terminals. Correspondingly, step S101 may be specifically implemented in the following manner: determining, by the first terminal based on the information that is included in the paging message and that is about the one or more paged second terminals, that the second terminal is paged. It may be understood that, the first terminal may alternatively determine, by itself, the second terminal that needs to be paged.

The information is an S-temporary mobile subscriber identity S-TMSI, an international mobile subscriber identity IMSI, or other information which may be used by the first terminal to determine that the network side device pages the second terminal, such as a local ID (local ID) of the second terminal, a proximity service terminal identifier ProSe UE ID of the second terminal, a layer (layer)-2 ID of the second terminal, or a cell radio network temporary identifier (Cell Radio Network Temporary Identifier, C-RNTI) of the second terminal.

Specifically, the paging message includes one or more paging records, where each of the one or more paging records includes information about a paged second terminal, and the information is an S-TMSI, an IMSI, or other information which may be used by the first terminal to determine that the network side device pages the second terminal, such as a local ID (local ID) of the second terminal or a proximity service terminal identifier ProSe UE ID of the second terminal.

Optionally, the paging message includes one or more paging records, where at least one paging record includes information about one or more paged second terminals.

Optionally, the paging message further includes a system information modification indication, earthquake and tsunami warning system indication information, and the like.

Because manners of paging a second terminal by the network side device may be different, operations performed by the paged second terminal based on the paging manners differ. Optionally, the paging message further includes information used to indicate a paging type.

Optionally, the paging type is that the network side device pages the second terminal by using an S-temporary mobile subscriber identity S-TMSI or an international mobile subscriber identity IMSI, or the paging type is that the network side device normally pages or abnormally pages the second terminal.

S102. The first terminal sends a first message to the second terminal, where the first message is used by the second terminal to determine that the second terminal is paged.

Specifically, in the solution in which the first terminal sends the first message to the second terminal after receiving the paging message sent by the network side device, step S102 may be specifically implemented in the following manner: sending, by the first terminal, the first message to the second terminal based on the paging message, where the first message is used by the second terminal to determine that the second terminal is paged.

In an actual process, not all second terminals connected to or associated with the first terminal are paged by the network side device. Therefore, it is possible that some of all the second terminals connected to or associated with the first terminal are paged, and some terminals are not paged. It may be understood that, this application is described only by using a paged second terminal as an example.

S104. The second terminal receives the first message sent by the first terminal.

S105. The second terminal determines, based on the received first message, whether the second terminal is paged.

In a conventional solution, a second terminal receives a paging message sent by a base station. When the second terminal is connected to a network side device by using a first terminal, the second terminal further needs to switch from a link for communicating with the first terminal to a link for communicating with the network side device, causing unnecessary switching. In this application, the first terminal sends, to the second terminal, a message including the first message used by the second terminal to determine that the second terminal is paged, so that the second terminal does not need to detect the paging message by switching to a link for communicating with the network side device, thereby avoiding unnecessary link switching. In addition, compared with receiving the paging message sent by the network side device, receiving, by the second terminal, the first message sent by the first terminal can reduce power consumption of the second terminal.

It should be noted that, when the first terminal pages the second terminal by itself or the network side device pages the second terminal by using the first terminal, step S102 may be omitted.

Optionally, the first message further includes a system information modification indication, earthquake and tsunami warning system indication information, and the like.

Because the S-TMSI or the international mobile subscriber identity IMSI usually occupies a relatively large quantity of bits, signaling overheads of the paging message are relatively high. Therefore, in an actual process, according to the invention, a quantity of bits occupied by information, in the first message, used to indicate that the second terminal is paged may be set less than a quantity of bits occupied by an S-TMSI or an international mobile subscriber identity IMSI of a second terminal. Therefore, this application describes content of the first message with reference to the following several different implementations.

In a first implementation of this application, the first message in this embodiment of the present invention includes one or more first identifiers, where a first identifier is used by a second terminal associated with the first identifier to determine that the second terminal is paged.

Optionally, each of the one or more first identifiers corresponds to one of one or more second terminals paged by the network side device.

Optionally, in this application, the first terminal may determine, based on the paging message sent by the network side device, the second terminal paged by the network side device. Therefore, the first message includes at least a first identifier or first identifiers of the one or more second terminals paged by the network side device.

Optionally, before step S102, this application further includes the following step:

S106. The first terminal determines a first identifier of the second terminal.

In this application, a first identifier of each second terminal may be allocated by the first terminal or the network side device. When the first identifier of each second terminal is allocated by the network side device, the network side device needs to send the allocated first identifier of each second terminal to the first terminal, so that the first terminal sends the first identifier of each of the at least one paged second terminal. Optionally, the first identifier is an identifier of the second terminal when the second terminal is connected to the first terminal, or the first identifier is an identifier allocated by the first terminal to the second terminal on a time resource for paging the second terminal, or the first identifier is a proximity service terminal identifier ProSe UE ID of the second terminal, a layer-2 identifier layer-2 ID of the second terminal, or a C-RNTI of the second terminal.

In a case, the first identifier is the identifier of the second terminal when the second terminal is connected to the first terminal, or a local identifier (local ID) of the second terminal. Each of one or more second terminals connected to or associated with the first terminal may be identified by using a local identifier, where the local identifier may be an index. The local identifier may be known by the network side device and/or the first terminal. The local identifier of the second terminal may be allocated by the network side device or the first terminal. For example, the 1^{st} and the 2^{nd} second terminals are connected to or associated with the 1^{st} first terminal, the network side device or the 1^{st} first terminal allocates a local identifier 1 to the 1^{st} second terminal, and allocates a local identifier 2 to the 2^{nd} second terminal. The 3^{rd} and the 4^{th} second terminals are connected to or associated with the 2^{nd} first terminal, the network side device or the 2^{nd} first terminal allocates a local identifier 1 to the 3^{rd} second terminal, and allocates a local identifier 2 to the 4^{th} second terminal. Second terminals connected to or associated with a same first terminal have different local identifiers (indexes). Different second terminals connected to or associated with different first terminals may have a same local identifier (index). Although values of the local identifiers of the 1^{st} second terminal and the 3^{rd} second terminal are the same, because the 1^{st} second terminal and the 3^{rd} second terminal are connected to or associated with different first terminals, the 1^{st} second terminal and the 3^{rd} second terminal can still be identified by using the local identifiers.

Specifically, the local identifier may be expressed in binary, octal, decimal, or hexadecimal form.

For example, the local identifier is expressed in binary form. For example, 128 second terminals are connected to the first terminal, a first identifier of the 1^{st} second terminal may be expressed as 0000000, a first identifier of the 2^{nd} second terminal may be expressed as 0000001, and a first identifier of the 128^{th} second terminal may be expressed as 1111111. Therefore, the first identifier of each second terminal can be expressed by using seven bits.

In a conventional technical solution, a network side device pages five second terminals in a terminal group by using an S-TMSI. In this case, a size of information that is in a paging message sent by the base station to each second terminal in the terminal group and that is used by the second terminal to determine that the second terminal is paged is at least 5 x 40 bits = 200 bits. That is, in the conventional technical solution, a size of the paging message received by each second terminal is at least 200 bits. If the first identifier in this application is used to page the five second terminals, information that is in a first message received by each second terminal and that is used by the second terminal to determine that the second terminal is paged requires a maximum of 5 x 7 bits = 35 bits. Therefore, the paging message sending method provided in this application can reduce signaling overheads of the first message received by the second terminal.

In another case, the first identifier is the identifier allocated by the first terminal to the second terminal on the time resource for paging the second terminal. One or more second terminals are connected to the first terminal, and the first terminal may page only some of the second terminals on one time resource, and page the other second terminals on another time resource. One identifier (index) is allocated to second terminals paged on a same time resource. For example, four second terminals are connected to the first terminal. The first terminal pages the 1^{st} second terminal and the 2^{nd} second terminal on a first time resource, and pages the 3^{rd} second terminal and the 4^{th} second terminal on a second time resource. The first time resource does not overlap with the second time resource, and the first time resource and the second time resource may each include a plurality of time resources. A first identifier of the 1^{st} second terminal is 1, and a first identifier of the 2^{nd} second terminal is 2. A first identifier of the 3^{rd} second terminal is 1, and a first identifier of the 4^{th} second terminal is 2. Although values of the first identifiers of the 1^{st} second terminal and the 3^{rd} second terminal are the same, because the 1^{st} second terminal and the 3^{rd} second terminal are paged on different time resources, the 1^{st} second terminal and the 3^{rd} second terminal can still be identified by using the first identifiers.

In this application, compared with the technical solution in which the first identifier is the identifier of the second terminal when the second terminal is connected to the first terminal, the solution in which the first identifier is the identifier allocated by the first terminal to the second terminal on the time resource for paging the second terminal can further reduce a quantity of bits occupied by a first identifier of each paged second terminal, thereby reducing signaling overheads of a paging message.

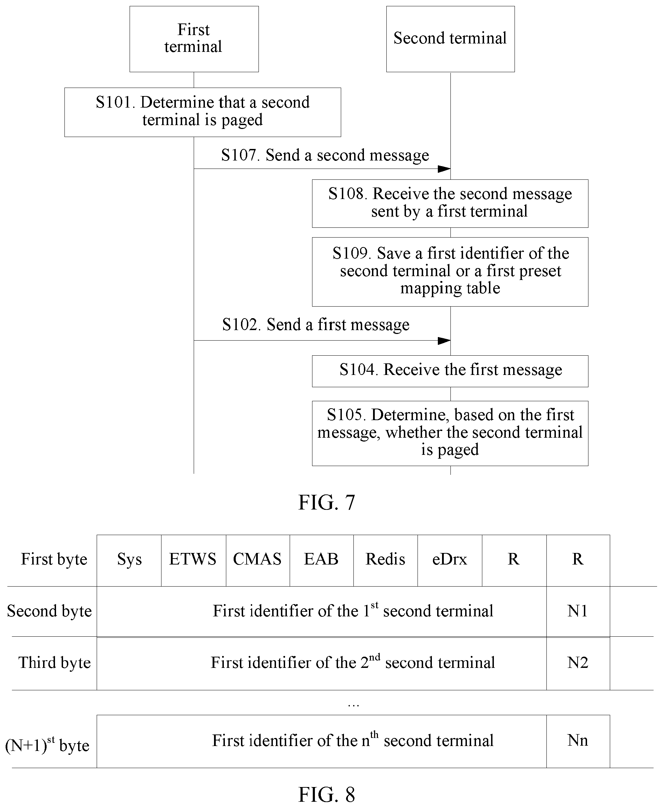

Optionally, as shown in FIG. 7, before S102 is performed, this application further includes the following steps.

S107. The first terminal or the network side device sends a second message to the second terminal, where the second message includes at least the first identifier of the second terminal or a first preset mapping table, the first preset mapping table includes at least a mapping relationship between the first identifier of the second terminal and a second identifier of the second terminal, and the second identifier is used to uniquely identify the second terminal.

In this way, after receiving the first message sent by the first terminal, each second terminal may match a first identifier carried in the first message with a first identifier of the second terminal, and determine, only when the first identifier carried in the first message is the same as the first identifier of the second terminal or the first identifier carried in the first message and the second identifier of the second terminal have a mapping relationship, that the second terminal is paged.

It may be understood that, the second identifier in this application is used to uniquely identify the second terminal, and the second identifier may be the S-TMSI or the IMSI of the second terminal, or identification information that is of each second terminal and that can uniquely identify the second terminal. In this case, each second terminal needs to determine an S-TMSI or an IMSI of the second terminal or identification information that uniquely identifies the second terminal. A manner used by the second terminal to obtain and determine the S-TMSI or the IMSI of the second terminal or the identification information that uniquely identifies the second terminal is not limited in this application. Likewise, the first terminal or the network side device needs to store the S-TMSI or the IMSI of each second terminal or the identification information that uniquely identifies each second terminal.

S108. The second terminal receives the second message sent by the first terminal or the network side device.

S109. The second terminal saves the first identifier of the second terminal or the first preset mapping table, where the first preset mapping table includes at least the mapping relationship between the first identifier of the second terminal and the second identifier of the second terminal.

It may be understood that, in an actual use process, the first preset mapping table includes a mapping relationship between each paged second terminal and a second identifier corresponding to the paged second terminal. In this application, the first identifier is used to replace or represent information about a paged second terminal in the conventional solution. Because the first identifier is set by the first terminal or the network side device based on a quantity of second terminals connected to or associated with the first terminal or is determined based on a quantity of second terminals paged on one time resource. In addition, the quantity of second terminals connected to the first terminal is finite, and fewer second terminals are paged on one time resource. Therefore, a quantity of bits occupied by the first identifier is less than that occupied by the S-TMSI or the IMSI of each paged second terminal. In this way, when determining that the second terminal is paged, the second terminal may further reduce signaling overheads of the first message received by each second terminal.

In this embodiment of the present invention, step S105 may be specifically implemented in the following manner.

S110. The second terminal determines that the second terminal is paged if determining that a first identifier associated with the second terminal or a first identifier that is the same as the first identifier of the second terminal exists in the one or more first identifiers included in the first message; or determines that the second terminal is not paged if determining that a first identifier same as the first identifier of the second terminal or having a mapping relationship with the identification information of the second terminal does not exist in the one or more first identifiers included in the first message.

Because manners of paging a second terminal by the network side device may be different, operations performed by the paged second terminal based on the paging manners after receiving the first message differ. Optionally, in this application, the first message further includes a first indication, and the first indication is used to indicate a paging type.

Optionally, the paging type is that the network side device pages the second terminal by using an S-temporary mobile subscriber identity S-TMSI or an international mobile subscriber identity IMSI, or the paging type is that the network side device normally pages or abnormally pages the second terminal. The paging type in this embodiment of the present invention may alternatively be another paging type in addition to the S-TMSI-based paging, the IMSI-based paging, the normal paging, and the abnormal paging. This is not limited in this application.

It should be noted that, in an actual use process, a paging type and the foregoing specific paging type may have different names. However, an operation performed by the second terminal based on the paging type is the same as an operation corresponding to the S-TMSI-based paging, the IMSI-based paging, the normal paging, and the abnormal paging.

Optionally, the first indication is represented by using an enumerated type (ENUMERATED), and may have two values, where one value indicates that the network side device pages a second terminal by using an S-TMSI, and the other value indicates that the network side device pages a second terminal by using an IMSI. Alternatively, one value is used to indicate that the network side device normally pages a second terminal, and the other value indicates that the network side device abnormally pages a second terminal.

Optionally, while indicating that the network side device normally pages the second terminal, the first indication in this embodiment of the present invention is further used to indicate that the network side device pages the second terminal by using the S-TMSI. Alternatively, while being used to indicate that the network side device abnormally pages the second terminal, the first indication is further used to indicate that the network side device pages the second terminal by using the IMSI.

It may be understood that, when the first terminal indicates, to the second terminal by using the first indication, the paging type (the normal paging or the abnormal paging, and the S-TMSI-based paging or the IMSI-based paging) used by the network side device for the second terminal, meanings represented by the values of the first indication may be specified in a standard or a protocol.

For example, the value of the first indication in this embodiment of the present invention may be a digit, a letter, or a combination of a digit or a letter. This is not limited in this application. For example, the value of the first indication may be "1" or "0".

Optionally, this embodiment of the present invention further includes the following step:
S111. The second terminal determines, according to the first indication, that the network side device pages the second terminal by using the S-TMSI or the IMSI, or determines, according to the first indication, that the network side device normally pages or abnormally pages the second terminal.

For example, if determining that the first indication in the first message is "1", the second terminal determines that the network side device pages the second terminal by using the S-TMSI or normally pages the second terminal; or if determining that the first indication in the first message is "0", the second terminal determines that the network side device pages the second terminal by using the IMSI or abnormally pages the second terminal.

Specifically, in this application, the first terminal sends the first message to the second terminal by using at least one of a radio resource control RRC message, a PC5 signaling protocol (signaling protocol) message, a media access control control element (Medium Access Control control element, MAC CE), and sidelink control information (Sidelink Control Information, SCI).

For example, an implementation of sending the first message by using the MAC CE is shown in FIG. 8, where the MAC CE includes at least one byte (byte), and the first to the sixth bits in the first byte are a system information modification and other indication information (for example, a system message change notification (System Information Change Notification, Sys), earthquake and tsunami warning system (Earthquake and Tsunami Warning System, ETWS), a commercial mobile alert service (Commercial Mobile Alert Service, CMAS), extended access barring (Extended Access Barring, EAB) parameter modification notification information, a redistribution indication (Redistribution indication, redis), and eDrx). R represents a reserved bit, a remote UE local ID 1 to a remote UE local ID n correspond to first identifiers of n remote UEs, and N₁ to Nn respectively indicate whether the network side device normally or abnormally pages the n remote UEs, or indicate whether the network side device pages the n remote UEs by using S-TMSIs or IMSIs. One MAC CE corresponds to one subheader (subheader), where the subheader includes a field, logical channel identifier (Logical Channel ID, LCID). In this application, a new LCID value may be defined to identify the MAC CE. For example, an LCID value 01011 is defined to correspond to the MAC CE. In this way, when receiving a subheader corresponding to a MAC CE, where an LCID value in the subheader is a preset value, the second terminal determines a format of the MAC CE.

According to an example not being part of the present invention, the first message in this application includes a first bitmap and a second bitmap, where the first bitmap is used to indicate that the network side device pages the second terminal by using an S-TMSI or normally pages the second terminal, the second bitmap is used to indicate that the network side device pages the second terminal by using an IMSI or abnormally pages the second terminal, the first bitmap and the second bitmap each include N bits, and at least one of the N bits is associated with the second terminal, where specifically, the at least one bit corresponds to the second terminal, and N is a positive integer.

For example, N may be a quantity of one or more second terminals connected to the first terminal, or N may be a quantity of one or more second terminals connected to the first terminal on a same time resource.

The at least one of the N bits in the first bitmap indicates whether the second terminal is paged by the network side device by using an S-TMSI, or the at least one of the N bits in the first bitmap indicates whether the second terminal is normally paged by the network side device.

The at least one of the N bits in the second bitmap indicates whether the second terminal is paged by the network side device by using an IMSI, or the at least one of the N bits in the second bitmap indicates whether the second terminal is abnormally paged by the network side device.

Specifically, the at least one bit in the first bitmap and the second bitmap is associated with the identification information of the second terminal.

Optionally, the identification information may be a first identifier of each second terminal, or an IMSI or an S-TMSI of each second terminal. This is not limited, provided that the identification information can uniquely identify the second terminal. The identification information may include an international mobile subscriber identity (International Mobile Subscriber Identification Number, IMSI) of a mobile device or hardware information of the second terminal. In addition, all hardware information having uniqueness may be used as the hardware information of the second terminal.

It may be understood that, each bit in the first bitmap may have two values, where one value is used to indicate that a second terminal associated with the bit is paged by the network side device by using an S-TMSI and the other value is used to indicate that a second terminal associated with the bit is not paged by the network side device by using an S-TMSI, or one value is used to indicate that a second terminal associated with the bit is normally paged by the network side device and the other value is used to indicate that a second terminal associated with the bit is not normally paged by the network side device. Each bit in the second bitmap may have two values, where one value is used to indicate that a second terminal associated with the bit is paged by the network side device by using an IMSI and the other value is used to indicate that a second terminal associated with the bit is not paged by the network side device by using an IMSI, or one value is used to indicate that a second terminal associated with the bit is abnormally paged by the network side device and the other value is used to indicate that a second terminal associated with the bit is not abnormally paged by the network side device.

A value of each bit may be a letter, a digit, or a combination of a letter and a digit. This is not limited in this application. For example, the value may be "1" or "0". For example, in an example of N being equal to 5, the first bitmap may be 10101. In this case, it can be learned from the first bitmap that, a second terminal associated with a bit 1 is paged by the network side device by using an S-TMSI or is normally paged by the network side device, a second terminal associated with a bit 2 is not paged by the network side device by using an S-TMSI or is not normally paged by the network side device, a second terminal associated with a bit 3 is paged by the network side device by using an S-TMSI or is normally paged by the network side device, a second terminal associated with a bit 4 is not paged by the network side device by using an S-TMSI or is not normally paged by the network side device, and a second terminal associated with a bit 5 is paged by the network side device by using an S-TMSI or is normally paged by the network side device.

The second bitmap may be 01000, including bits 1, 2, 3, 4, and 5 from the first/leftmost bit to the last/rightmost bit. In this case, it can be learned from the second bitmap that, a second terminal associated with a bit 1 is not paged by the network side device by using an IMSI or is not abnormally paged by the network side device, a second terminal associated with a bit 2 is paged by the network side device by using an IMSI or is abnormally paged by the network side device, a second terminal associated with a bit 3 is not paged by the network side device by using an IMSI or is not abnormally paged by the network side device, a second terminal associated with a bit 4 is not paged by the network side device by using an IMSI or is not abnormally paged by the network side device, and a second terminal associated with a bit 5 is not paged by the network side device by using an IMSI or is not abnormally paged by the network side device.

Certainly, if a value of a bit in the first bitmap or the second bitmap is "0", it indicates that a second terminal associated with the bit is not paged by using a paging type indicated by the first bitmap or the second bitmap.

It may be understood that, in an actual use process, the first message sent by the first terminal to the second terminal may carry only a first bitmap or second bitmap sequence, to be specific, 101010. In this case, the second terminal and the first terminal default that a bit sequence is from left to right or from right to left.

When the first message includes the first bitmap and the second bitmap, step S105 may be specifically implemented by using step S112 or step S113.

S112. The second terminal determines, based on the first bitmap, whether the second terminal is paged by the network side device by using the S-TMSI or is normally paged by the network side device, and the second terminal determines, based on the second bitmap, whether the second terminal is paged by the network side device by using the IMSI or is abnormally paged by the network side device. Specifically, the second terminal determines, based on at least one bit associated with the second terminal in the first bitmap, whether the second terminal is paged by the network side device by using the S-TMSI or is normally paged by the network side device, and the second terminal determines, based on at least one bit associated with the second terminal in the second bitmap, whether the second terminal is paged by the network side device by using the IMSI or is abnormally paged by the network side device.

Specifically, when determining that a value of a bit associated with the second terminal in the first bitmap is a first parameter, the second terminal determines that the second terminal is paged by the network side device by using the S-TMSI or is normally paged by the network side device. When determining that a value of a bit associated with the second terminal in the first bitmap is a second parameter, the second terminal determines that the second terminal is not paged by the network side device by using the S-TMSI or is not normally paged by the network side device.

When determining that a value of a bit associated with the second terminal in the second bitmap is the first parameter, the second terminal determines that the second terminal is paged by the network side device by using the IMSI or is abnormally paged by the network side device. When determining that a value of a bit associated with the second terminal in the second bitmap is the second parameter, the second terminal determines that the second terminal is not paged by the network side device by using the IMSI or is not abnormally paged by the network side device.

In an actual process, not all second terminals receiving the first message are paged. Therefore, when the first terminal sends the first message in the second possible implementation, the second terminal determines that the second terminal is not paged only after determining that values of all bits associated with the second terminal in the first bitmap and the second bitmap are the second parameter. This is because the first bitmap and the second bitmap indicate a paged second terminal by using a value of a bit, the first bitmap is further used to indicate that the network side device pages the second terminal by using an S-TMSI or normally pages the second terminal, and the second bitmap is further used to indicate that the network side device abnormally pages the second terminal or pages the second terminal by using an IMSI. In addition, in an actual process, the network side device cannot simultaneously abnormally page (page by using an IMSI) and normally page (page by using an S-TMSI) a second terminal. Therefore, if the first bitmap indicates that a second terminal is not paged, the second bitmap may indicate that the second terminal is paged, but if the first bitmap indicates that a second terminal is paged, the second bitmap definitely indicates that the second terminal is not paged. That is, values of bits associated with a same second terminal in the first bitmap and the second bitmap may both be the second parameter, but values of bits associated with a same second terminal in the first bitmap and the second bitmap cannot both be the first parameter.

Correspondingly, step S105 may be specifically implemented in the following manner:
S113. If the second terminal determines that both a value of a bit associated with the second terminal in the first bitmap and a value of a bit associated with the second terminal in the second bitmap are the second parameter, the second terminal determines that the second terminal is not paged. Alternatively, if the second terminal determines that a bit associated with the second terminal exists neither in the first bitmap nor in the second bitmap, the second terminal determines that the second terminal is not paged.

According to another example not being part of the present invention, the first message in this application includes a third bitmap, where the third bitmap includes N bits, at least one of the N bits is associated with the second terminal, and the at least one of the N bits indicates whether the second terminal is paged, where N is a positive integer. For example, N may be a quantity of one or more second terminals connected to the first terminal, or N may be a quantity of one or more second terminals connected to the first terminal on a same time resource.

Specifically, the at least one of the N bits corresponds to a second terminal, and each bit in the third bitmap is used to indicate whether a second terminal associated with the bit is paged.

Optionally, a value of each bit in the third bitmap in this application may be a letter, a digit, or a combination of a letter and a digit. Specifically, the value in the third bitmap may be a third parameter or a fourth parameter. A value of the at least one of the N bits being the third parameter is used to indicate that the second terminal associated with the at least one bit is paged. A value of the at least one of the N bits being the fourth parameter is used to indicate that the second terminal associated with the at least one bit is not paged.

For example, the third parameter is "1", and the fourth parameter is "0". In an example of N being equal to 5, the third bitmap may be 10110, and bits from the first/leftmost to the last/rightmost are a bit 1, a bit 2, a bit 3, a bit 4, and a bit 5.

It can be learned that, a second terminal associated with the bit 1 is paged, a second terminal associated with the bit 2 is not paged, a second terminal associated with the bit 3 is paged, a second terminal associated with the bit 4 is paged, and a second terminal associated with the bit 5 is not paged.

Optionally, the first message further includes a fourth bitmap, where the fourth bitmap includes M bits, and at least one of the M bits is associated with the second terminal, where M is a positive integer. The at least one of the M bits indicates that the second terminal is paged by the network side device by using an S-TMSI or an IMSI, or the at least one of the M bits indicates that the second terminal is normally or abnormally paged by the network side device.

Specifically, the at least one of the M bits is associated with the second terminal, a value of the at least one bit in the fourth bitmap is used to indicate that if the second terminal associated with the at least one bit is paged, the network side device pages the second terminal by using the S-TMSI or the IMSI. Alternatively, a value of the at least one bit in the fourth bitmap is used to indicate that if the second terminal associated with the at least one bit is paged, the network side device normally or abnormally pages the second terminal.

It may be understood that, M is related to a quantity of paged second terminals, or M is related to a quantity of one or more second terminals connected to the first terminal. For example, M may be a quantity of one or more second terminals connected to the first terminal, or M may be a quantity of one or more second terminals connected to the first terminal on a same time resource, or M may be a quantity of paged second terminals indicated by the third bitmap.

Optionally, a value in the fourth bitmap is a fifth parameter or a sixth parameter. The value of the at least one bit in the fourth bitmap being the fifth parameter is used to indicate that if the second terminal associated with the at least one bit is paged, the network side device pages the second terminal by using the S-TMSI or normally pages the second terminal. The value of the at least one bit in the fourth bitmap being the sixth parameter is used to indicate that if the second terminal associated with the at least one bit is paged, the network side device pages the second terminal by using the IMSI or abnormally pages the second terminal.

For example, when the third bitmap is 10110, the second terminals respectively associated with the bit 1, the bit 3, and the bit 4 are paged. In this case, to further indicate a manner of paging the second terminal by the network side device, in this application, a value in the fourth bitmap may be used to indicate a paging manner used by the network side device for each paged second terminal.

For example, M=N. If a value of a bit 1 in the fourth bitmap is the fifth parameter, for example, "1", it indicates that the network side device pages, by using an S-TMSI, or normally pages a second terminal having a mapping relationship with the bit 1. If a value of a bit 3 in the fourth bitmap is the sixth parameter, for example, "0", it indicates that the network side device pages, by using an IMSI, or abnormally pages a second terminal having a mapping relationship with the bit 3. It may be understood that, the second terminals corresponding to the bits 1, 2, 3, 4, and 5 in the third bitmap are second terminals corresponding to bits 1, 2, 3, 4, and 5 in the fourth bitmap.

For another example, M is equal to the quantity of paged second terminals in the third bitmap, to be specific, a quantity of bits whose values are 1 in the third bitmap, namely, 3. The fourth bitmap is 101, and bits from the first/leftmost to the last/rightmost are bits 1, 2, and 3. In this case, a second terminal corresponding to the bit 1 in the fourth bitmap is the second terminal corresponding to the bit 1 in the third bitmap, a second terminal corresponding to the bit 2 in the fourth bitmap is the second terminal corresponding to the bit 3 in the third bitmap, and a second terminal corresponding to the bit 3 in the fourth bitmap is the second terminal corresponding to the bit 4 in the third bitmap. The network side device pages, by using S-TMSIs, or normally pages the second terminals corresponding to the bits 1 and 3 in the fourth bitmap, and the network side device pages, by using an IMSI, abnormally pages the second terminal corresponding to the bit 2 in the fourth bitmap.

When the first message includes the third bitmap and/or the fourth bitmap, this application further includes the following steps.

Step S105 may be specifically implemented in the following manners not being part of the present invention:
S114. If the second terminal determines that the value of the at least one bit associated with the second terminal in the third bitmap is the third parameter, the second terminal determines that the second terminal is paged; or if the second terminal determines that the value of the at least one bit associated with the second terminal in the third bitmap is the fourth parameter, the second terminal determines that the second terminal is not paged.
S115. When determining that the second terminal is paged, the second terminal determines, based on the fourth bitmap, that the network side device pages the second terminal by using the S-TMSI or normally pages the second terminal, or that the network side device pages the second terminal by using the IMSI or normally pages the second terminal.

Specifically, if determining that the value of the at least one bit associated with the second terminal is the fifth parameter, the second terminal determines that the network side device pages the second terminal by using the S-TMSI or normally pages the second terminal; or if determining that the value of the at least one bit associated with the second terminal in the fourth bitmap is the sixth parameter, the second terminal determines that the network side device pages the second terminal by using the IMSI or abnormally pages the second terminal.

It may be understood that, when the first message does not include the fourth bitmap, step S113 in this application may be omitted.

In the example described before, the second terminal determines that the second terminal is not paged only after determining that the value of the at least one bit associated with the second terminal in each of the first bitmap and the second bitmap is the second parameter, while in this example, the second terminal can determine that the second terminal is not paged only by determining that the value of the at least one bit associated with the second terminal in the third bitmap is the fourth parameter.

Before the first terminal sends the first message in the second implementation and the third implementation, the method provided in this application further includes the following steps.

S116. The first terminal or the network side device sends a third message to the second terminal, where the third message indicates that one of N bits is associated with the second terminal.

It may be understood that, the N bits may be the N bits in the first bitmap, the second bitmap, or the third bitmap.

S117. The second terminal receives the third message, and determines, based on the third message, the at least one bit associated with the second terminal.

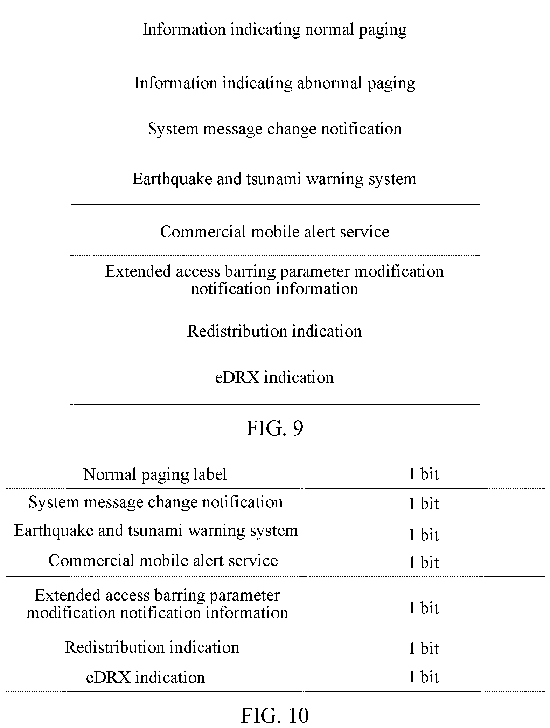

Optionally, in addition to the foregoing three transmission modes, namely, using the RRC message, the PC5 signaling protocol (signaling protocol) message, and the media access control control element, the first message may alternatively be transmitted by using sidelink control information (Sidelink Control Information, SCI). FIG. 9 is only an example of a possible schematic diagram of information included in the SCI. The first piece of information in the SCI is used to indicate a normally paged bitmap (namely, the first bitmap), the second piece of information is used to indicate an abnormally paged bitmap (namely, the second bitmap), and the third to the eighth pieces of information are system information modification indication information and other indication information (for example, a system information modification notification (System info modification), an ETWS indication (indication), a CMAS indication, an EAB indication, a redistribution (Redistribution) indication, and an eDRX indication). It may be understood that, in an actual process, the SCI may include more or less information than those in FIG. 9, and details are not further described in this application.

According to another example not being part of the present invention the following step is performed:
S118. The first terminal sends control signaling to the second terminal, where the control signaling instructs the second terminal to determine that the first message is used to page the second terminal.

Optionally, the control signaling may be sidelink control information. The control signaling is the first message, or a MAC PDU corresponding to/scheduled by the control signaling includes the first message.

Specifically, step S118 may be implemented by using any one of the following steps.

S1181. The first terminal adds first information to the control signaling, so that the control signaling is used by the second terminal to determine that the first message is used to page the second terminal, where the first information is used by the second terminal to determine that the first message is used to page the second terminal.

Specifically, the control signaling includes a field, and the first terminal may set the field included in the control signaling as the first information. For example, the control signaling includes a two-bit field. When a value of the field is 00, it indicates that the first message is used to page the second terminal.

S1182. The first terminal scrambles the control signaling by using the first information, so that the control signaling is used by the second terminal to determine that the first message is used to page the second terminal.

Specifically, the first terminal obtains an initialization sequence of a scrambling sequence generator based on the first information, and scrambles the control signaling by using a scrambling sequence output by the scrambling sequence generator. Alternatively, the first terminal scrambles a cyclic redundancy check (Cyclic Redundancy Check, CRC) bit of the control signaling by using the first information. Specifically, CRC attachment (CRC attachment) is performed on the control signaling, and the first information is used to scramble the CRC check bit.

S1183. The first terminal adds a portion of the first information to the control signaling, and scrambles another portion of the first information by using the control signaling, so that the control signaling is used by the second terminal to determine that the first message is used to page the second terminal.

The first information is any one of an identifier, a group identifier, and a paging radio network temporary identifier P-RNTI of the first terminal, where the group identifier is an identifier of a group to which the second terminal belongs. It may be understood that, the second terminal needs to know the identifier or the group identifier of the first terminal. The second terminal may obtain the identifier or the group identifier of the first terminal by using the network side device or the first terminal.

For example, all second terminals connected to or associated with the first terminal form a group, where the group has a group identifier. Optionally, the first terminal may also belong to the group. The present invention imposes no limitation on a definition of the group to which the second terminal belongs.

For example, the first information includes 24 bits. In this case, the first terminal adds lower 8 bits of the first information to the control signaling, and the first terminal scrambles the control signaling by using the other higher 16 bits of the first information.

Optionally, step S 118 may be specifically implemented in the following manner: S1184. The first terminal sends sidelink control information to the second terminal, where the sidelink control information includes a portion of first information, a media access control control protocol data unit MAC PDU associated with or scheduled by the control signaling includes another portion of the first information, where the MAC PDU includes the first message, and the first information is used by the second terminal to determine that the first message is used to page the second terminal.

For example, the first information includes 24 bits. The first terminal adds lower 8 bits of the first information to the control signaling, and adds the other higher 16 bits of the first information to a subheader of the MAC PDU associated with the control signaling. The first message is included in a load of the MAC PDU.

Optionally, the second terminal may determine, based on a length of the control signaling, that the first message is used to page the second terminal. Specifically, if the second terminal determines that the length of the received control signaling is a preset bit quantity, the second terminal determines that the first message is used to page the second terminal. Optionally, the first information may alternatively be a sequence, and a transmission mode of the indication information used by the second terminal to determine a target ID, a source ID, or a group (Group) target ID is reused for a transmission mode of the first information. For example, the target ID may be a target layer-2 ID, and the source ID may be a source layer-2 ID. For example, the control signaling includes a field, where a name of the field may be a target (Destination) ID or a group destination ID, and a length of the field may be 8 bits or 24 bits. This application imposes no limitation on the name and the length of the field. When a value of the field is a sequence corresponding to the first information, the second terminal determines that the first message is used to page the second terminal. When the value of the field is not the sequence corresponding to the first information, the second terminal determines that the value of the field is the target ID. For another example, a length of the first information is 24 bits, the control signaling includes s first field having a length of 8 bits, and the subheader of the MAC PDU corresponding to the control signaling includes a second field having a length of 16 bits. When a value of the first field is lower 8 bits of the first information, and a value of the second field is the higher 16 bits of the first information, the second terminal determines that the first message is used to page the second terminal. Otherwise, the second terminal determines that the values of the fields are a target ID.

Correspondingly, this example not being part of the present invention includes the following step:
S119. The second terminal receives the control signaling sent by the first terminal, where the control signaling is used to instruct the second terminal to determine that the first message is used to page the second terminal; and determines, based on the control signaling, that the first message is used to page the second terminal.

Specifically, the control signaling includes the first information, where the first information is used by the second terminal to determine that the first message is used to page the second terminal; or the control signaling is scrambled by using the first information; or the control signaling includes a portion of the first information and the control signaling is scrambled by using another portion of the first information.

Optionally, this example not being part of the present invention includes the following step:
S120. The first terminal sends second information to the second terminal by using the control signaling, where the second information is used by the second terminal to determine whether the first message to be is sent to the second terminal.

Before S120 is performed, this example further includes the following step:
S121. The first terminal determines the second information, where the second information is at least one of an identifier and a group identifier of the second terminal, and the group identifier is the identifier of the group to which the second terminal belongs. Optionally, the second information may alternatively be the identifier of the first terminal. In this case, the first terminal sends the first message to a plurality of second terminals connected to or associated with the first terminal. It may be understood that, in this case, the second terminal needs to know the identifier or the group identifier of the first terminal. The second terminal may obtain the identifier or the group identifier of the first terminal by using the network side device or the first terminal. This is not limited in this application.

For example, the identifier of the second terminal may be a layer-2 ID of the second terminal, a ProSe UE ID of the second terminal, a C-RNTI of the second terminal, or a local ID of the second terminal.

Optionally, the first message may further include indication information (for example, the first indication) used to instruct the network side device to normally page or abnormally page the second terminal, or include indication information used to instruct the network side device to page the second terminal by using the S-TMSI or the IMSI. The first message may further include indication information such as a system information modification indication.

It should be noted that the control signaling sent by using the first information and the control signaling sent by using the second information are same control signaling.

Optionally, step S120 may be specifically implemented by using any one of the following steps.

S121. The first terminal adds the second information to the control signaling.

Specifically, the control signaling includes a field, and the first terminal may set the field included in the control signaling as the second information. For example, the control signaling includes a two-bit field. When a value of the field is 00, it indicates that the first message is used to page the second terminal.

S122. The first terminal scrambles the control signaling by using the second information.

Specifically, the first terminal obtains an initialization sequence of a scrambling sequence generator based on the second information, and scrambles the control signaling by using a scrambling sequence output by the scrambling sequence generator. Alternatively, the first terminal scrambles a cyclic redundancy check (Cyclic Redundancy Check, CRC) bit of the control signaling by using the second information. Specifically, CRC attachment (CRC attachment) is performed on the control signaling, and the second information is used to scramble the CRC check bit.

S123. The first terminal adds a portion of the second information to the control signaling, and scrambles the control signaling by using another portion of the second information.

For example, the second information has a total of 24 bits, lower 8 bits of the layer-2 ID of the second terminal may be added to the SCI, and the remaining higher 16 bits of the layer-2 ID of the second terminal may be used to scramble SCI or a CRC of SCI.

During specific implementation, the first message may be transmitted by using the SCI. The SCI may be transmitted over a PSCCH. FIG. 10 is another schematic content diagram of the SCI according to an embodiment of the present invention. The first piece of information is used to instruct the network side device to normally page or abnormally page the second terminal, and the second to the last pieces of information are indication information such as system information modification indication information. It can be learned from FIG. 10 that each piece of information occupies only one bit. It may be understood that, FIG. 10 is only an example of a schematic diagram of information included in the SCI. It may be understood that, in an actual use process, the SCI may further include more or less information.

It may be understood that, the first message may alternatively be transmitted by using a MAC CE. Table 1 is a schematic diagram of a possible MAC CE. The first bit is indication information used to instruct the network side device to normally page or abnormally page the second terminal, the second to the seventh bits are indication information such as system information modification indication information, and the eighth bit is a reserved bit.

**Table 1**

| | | | | | | | |
|---|---|---|---|---|---|---|---|
| Normal | Sys | ETWS | CMAS | EAB | Redis | eDrx | R |

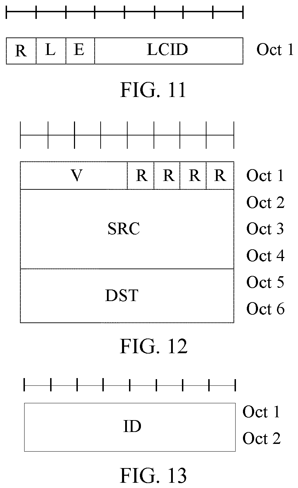

Optionally, one MAC CE corresponds to one subheader (subheader), where the subheader includes a field LCID. In this application, an LCID value is newly defined to indicate a MAC CE. For the subheader of the MAC CE, an existing subheader may be reused, or a new subheader may be defined, as shown in FIG. 11, where R is a reserved bit, and a field L indicates a length of the MAC CE, and specifically, indicates whether the length of the MAC CE is one byte or two bytes.

Optionally, this example further includes the following step:
S124. The first terminal transmits the first message by using an SL-SCH MAC PDU, sets an SRC field in a sidelink shared channel (Sidelink Shared Channel, SL-SCH) subheader as the identifier of the first terminal, and sets a DST field in the SL-SCH subheader as the first information or the second information.

The MAC PDU includes an SL-SCH subheader, and the subheader is shown in FIG. 12. The SRC may be set as the identifier of the first terminal, and the DST is set as the first information or the second information of this application. For example, the DST is the identifier or the group identifier of the first terminal, or an identifier indicating paging.

Optionally, this example includes the following step:
S125. The first terminal uses a logical channel identifier (Logical Channel ID, LCID) in a MAC subheader to indicate that a media access control service data unit MAC SDU corresponding to the MAC subheader includes the first message.

For example, the MAC SDU including the first message is identified by using a logical channel identifier LCID value in the MAC subheader. When the LCID value in the MAC subheader is a specific value, for example, 01011, it indicates that the MAC SDU corresponding to the subheader includes the first message.

Optionally, when the first terminal sends the control signaling so that the second terminal determines that the first message is used to page the second terminal, a structure of the MAC PDU including the first message may be simplified. A method is that the MAC PDU is a transparent MAC PDU. That is, the MAC PDU includes only a MAC SDU, and the MAC SDU includes the first message. A method is that a MAC PDU header includes a MAC subheader of the MAC SDU, or plus a padding (padding) MAC subheader. A method is that a MAC subheader is newly defined, as shown in FIG. 13. Compared with an existing SL-SCH subheader, the subheader shown in FIG. 13 includes only an ID field, reducing a quantity of occupied bits.

The foregoing described manner of sending, by the first terminal, control signaling to the second terminal, where the control signaling instructs the second terminal to determine that the first message is used to page the second terminal, may also be applied to a case in which the second terminal distinguishes different pieces of SCI. A plurality of types of SCI may be transmitted on a PSCCH, where, for example, some SCI is used to indicate information such as a resource of a PSSCH corresponding to the SCI and a used MCS, some SCI is used to page another UE or a MAC PDU associated with/scheduled by SCI is used to page a UE, some SCI is used to indicate information of another UE, such as a resource for sending the SCI and/or a PSSCH or a transmit power, and some SCI is used to transmit feedback information such as an ACK/a NACK, an MCS, and power adjustment. Therefore, the second terminal needs to determine a type of SCI received by the second terminal. In this way, the second terminal can correctly parse information included in the SCI. Therefore, the method provided in this application further includes: sending, by the first terminal, third information to the second terminal by using control signaling (where, for example, the control signaling may be sidelink control information), where the third information is used to determine a type of the control signaling, and the type of the control signaling includes at least one of control signaling for scheduling the first terminal to perform communication, control signaling for scheduling a second terminal to perform communication, control signaling for paging a second terminal, and control signaling for instructing the first terminal to feed back information.

Optionally, the third information may be a sequence whose length is greater than or equal to one bit, or the third information may be an RNTI, or the third information may be the identifier of the first terminal or the second terminal.

Optionally, the sending, by the first terminal, third information to the second terminal by using control signaling includes any one of the following: The first terminal adds the third information to the control signaling.

Specifically, the control signaling includes a field. The first terminal may set a value of the field as a third message, where the third message may reuse a field with other indication information.

Alternatively, the first terminal scrambles the control signaling by using the third information.

Specifically, the first terminal obtains an initialization sequence of a scrambling sequence generator based on the third information, and scrambles the control signaling by using a scrambling sequence output by the scrambling sequence generator. Alternatively, the first terminal scrambles a CRC check bit of the control signaling by using the third information. Specifically, CRC attachment (CRC attachment) is performed on the control signaling, and the third information is used to scramble the CRC check bit.

Alternatively, the first terminal adds a portion of the third information to the control signaling, and scrambles the control signaling by using another portion of the third information.

For example, the third information includes 24 bits. In this case, the first terminal adds lower 8 bits of the third information to the control signaling, and the first terminal scrambles the control signaling by using the other higher 16 bits of the third information.

Correspondingly, this example further includes step S126: The second terminal receives, by using the control signaling, the third information sent by the first terminal, where the third information is used by the second terminal to determine a type of the received control signaling sent by the first terminal.

Specifically, step S126 may be implemented in the following manner: obtaining, by the second terminal, the third information from the control signaling sent by the first terminal, where the control signaling includes the third information; or obtaining, by the second terminal, the third information from the control signaling that is scrambled by using the third information and that is sent by the first terminal; or obtaining, by the second terminal, the third information from the control signaling sent by the first terminal, where the control signaling includes a portion of the third information, and the control signaling is scrambled by using another portion of the third information.

Optionally, the control signaling is control signaling for paging the second terminal, and the control signaling includes a fourth indication, where the fourth indication is used to indicate a paging type. The paging type is that a network side device pages the second terminal by using an S-temporary mobile subscriber identity S-TMSI or an international mobile subscriber identity IMSI, or the paging type is that a network side device normally pages or abnormally pages the second terminal.

This example further includes the following steps: S127. The first terminal determines fourth information, where the fourth information is at least one of the identifier and the group identifier of the second terminal, the group identifier is an identifier of a group to which the second terminal belongs, and the fourth information is used to determine whether the first message is sent to the second terminal. S128. The first terminal sends the fourth information to the second terminal by using the control signaling.

Optionally, the first message may be control signaling, or the first message is a load of a MAC PDU associated with/scheduled by the control signaling.

Optionally, the control signaling may be sidelink control information.

Optionally, the fourth information may alternatively be the identifier of the first terminal. In this case, the first message is sent to a plurality of second terminals connected to or associated with the first terminal. The second terminal determines, based on the fourth information, that a destination ID is the ID of the first terminal, and determines, based on the MAC PDU associated with/scheduled by the control signaling, that a source ID is also the ID of the first terminal. In this case, the second terminal determines that the first message is sent to the second terminal.

For example, all second terminals connected to or associated with the first terminal form a group, where the group has a group identifier. Optionally, the first terminal may also belong to the group. This embodiment of the present invention imposes no limitation on a definition of the group to which the second terminal belongs.

Step S128 may be specifically implemented in any one of the following manners: The first terminal adds the fourth information to the control signaling (where, specifically, the first terminal may set a value of a field in the control signaling as the fourth information).

Alternatively, the first terminal scrambles the control signaling by using the fourth information.

Specifically, the first terminal obtains an initialization sequence of a scrambling sequence generator based on the fourth information, and scrambles the control signaling by using a scrambling sequence output by the scrambling sequence generator. Alternatively, the first terminal scrambles a CRC check bit of the control signaling by using the fourth information. Specifically, CRC attachment (CRC attachment) is performed on the control signaling, and the fourth information is used to scramble the CRC check bit.

Alternatively, the first terminal adds a portion of the fourth information to the control signaling, and scrambles the control signaling by using another portion of the fourth information.

For example, the fourth information includes 24 bits. In this case, the first terminal adds lower 8 bits of the fourth information to the control signaling, and the first terminal scrambles the control signaling by using the other higher 16 bits of the fourth information.

The method according to this example further includes the following step: S129. The second terminal receives, by using the control signaling, the fourth information sent by the first terminal, and determines, based on the fourth information, whether the first message is sent to the second terminal.

It may be understood that, in this case, different types of SCI correspond to different scrambling sequences. Therefore, the second terminal needs to determine a scrambling sequence used to indicate a paging message, and a scrambling sequence used to indicate a resource of a PSSCH corresponding to SCI. The second terminal and the first terminal may default that SCI scrambled by using a preset scrambling sequence is used to indicate the paging message, or the first terminal notifies the second terminal of the paging message after determining the paging message, or the second terminal and the first terminal negotiate to determine a scrambling sequence used to indicate paging.

A method is that a field is included in the SCI, where the field is used to indicate a type of the SCI. For example, for two bits in the SCI, when the two bits are 00, a type of SCI (for example, SCI used to indicate paging) is corresponded to, and when the two bits are 01, another type of SCI (for example, SCI used to indicate a resource of another UE for sending the SCI and/or a PSSCH) is corresponded to.

A method is that SCI is distinguished based on a UE type. For example, SCI used to page a UE, or SCI used to indicate information of another UE, such as a resource for sending the SCI and/or a PSSCH or a transmit power, can only be sent by a relay UE. In this way, when the relay UE receives the SCI, the SCI is not decoded based on the SCI used to page another UE or based on the SCI used to indicate the information of the another UE, such as the resource for sending the SCI and/or the PSSCH, or the transmit power. However, when receiving the SCI, remote UE may decode the SCI based on the SCI used to page a UE or based on the SCI used to indicate information of another UE, such as a resource for sending the SCI and/or a PSSCH, or a transmit power.

When types of SCI are different, lengths of the SCI may be different. Therefore, the second terminal may alternatively determine a type of a received SCI based on a length of the SCI, for example, SCI used to indicate the paging message. For example, a length of SCI used to page another UE is 24, and a length of SCI used to indicate information of another UE, such as a resource for sending the SCI and/or a PSSCH, or a transmit power, is 32. When the second terminal receives the SCI used to page the another UE, if determining that decoding is correct when the decoding is performed in a length of 24 bits, the second terminal determines that the received SCI is used to indicate the paging message. If determining that decoding is correct when the decoding is performed in a length of 32 bits, the second terminal determines that the received SCI is used to indicate the resource of the another UE for sending the SCI and/or the PSSCH.

Optionally, step S102 performed by the first terminal in this application may be specifically implemented in the following manner: determining, by the first terminal, an identifier of each of one or more paged second terminals based on information about the one or more paged second terminals in the paging message; and determining, by the first terminal, specific content of the first message based on the determined identifier of each paged second terminal.

For example, the content of the first message may include any one of: the first identifier of each paged second terminal, the first bitmap in which a value of a bit having a mapping relationship with identification information of each second terminal is the first parameter or the second parameter, the second bitmap in which a value of a bit having a mapping relationship with the identification information of each second terminal is the first parameter or the second parameter, and the third bitmap in which a value of a bit having a mapping relationship with the identification information of each second terminal is a first value or a second value.

Optionally, alternatively, step S102 may be specifically implemented in the following manner: determining, by the first terminal based on information about one or more paged second terminals in the paging message, a manner in which the network side device pages each paged second terminal; and adding the first indication to the first message based on the determined manner in which the network side device pages each paged second terminal; or indicating, by using the fourth bitmap, the manner in which the network side device pages each paged second terminal.

For example, if the first terminal determines that a paging message sent by the network side device is used to page a UE 1, the first terminal determines that the first message includes a first identifier of the UE 1. When the first terminal determines that the network side device pages the UE 1 by using an S-TMSI, the first message sent to the UE 1 further includes the first indication used to indicate that the network side device pages the UE 1 by using the S-TMSI or normally pages the UE 1.

For another example, if the first terminal determines that a paging message sent by the network side device is used to page a UE 1, and the network side device normally pages the UE 1, the first terminal determines that a value of a bit having a mapping relationship with identification information that is of the UE 1 in the first bitmap and that is included in the first message is the first parameter.

For still another example, if the first terminal determines that a paging message sent by the network side device is used to page a UE 1, and the network side device normally pages the UE 1, the first terminal determines that a value of a bit having a mapping relationship with identification information that is of the UE 1 in the third bitmap and that is included in the first message is the first parameter. The first message sent to the UE 1 further includes the fourth bitmap, where a value of a bit having a mapping relationship with the identification information of the UE 1 in the fourth bitmap is the fifth parameter.

The foregoing describes the solutions provided in the embodiments of the present invention mainly from the perspective of interaction between network elements. It may be understood that to implement the foregoing functions, the foregoing various network elements such as the first terminal or the second terminal include hardware structures and/or software modules corresponding to the various functions. A person of ordinary skill in the art should easily be aware that, in combination with the examples described in the embodiments disclosed in this specification, network element, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, functional module division may be performed on the first terminal or the second terminal according to the examples of the methods. For example, various functional modules may be divided according to the corresponding functions, or two or more functions may be integrated into one processing module. The integrated module may be implemented in a form of hardware, or may be implemented in a form of a software functional module. It should be noted that, in this embodiment of the present invention, module division is exemplary, and is merely a logical function division. In actual implementation, another division manner may be used.

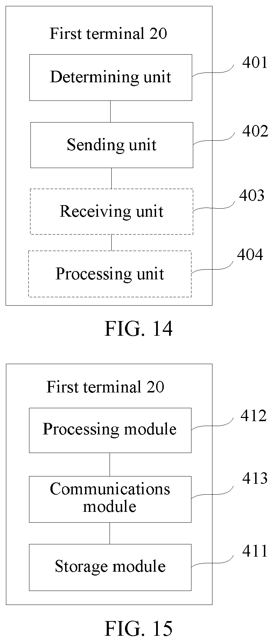

When the functional modules are divided corresponding to the functions, FIG. 14 is a possible schematic structural diagram of the first terminal in the foregoing embodiment. The first terminal 20 includes a determining unit 401 and a sending unit 402. The determining unit 401 is configured to support the first terminal 20 in performing steps S101, S106, S121, and S127 in the foregoing embodiment. The sending unit 402 is configured to support the first terminal 20 in performing steps S102, S107, S116, S118 (which may be specifically S1181, S1182, S1183, and S1184), S120, S124, and S128 in the foregoing embodiment. Certainly, the first terminal provided in this application may further include a receiving unit 403 and a processing unit 404. The receiving unit 403 is configured to support the second terminal in performing step S103 in the foregoing embodiment. The processing unit 404 is configured to support the second terminal 20 in performing steps S121, S122, S123, and S125 in the foregoing embodiment. All related content of the steps in the foregoing method embodiments may be referred for the functional descriptions of the corresponding functional modules. Details are not described herein again.

Based on hardware implementation, in this application, the receiving unit 403 may be a receiver of the first terminal 20, the sending unit 402 may be a transmitter of the first terminal 20, where usually, the receiver and the transmitter may be integrated as a transmitter, and specifically, the receiving unit 403 and the sending unit 402 may be the transceiver 102 of the first terminal 20 shown in FIG. 3, and the determining unit 401 and the processing unit 404 may be integrated into the processor 101 of the first terminal 20 shown in FIG. 3.

When an integrated unit is used, FIG. 15 is a possible schematic diagram of a logical structure of the first terminal 20 in the foregoing embodiment. The first terminal 20 includes a processing module 412 and a communications module 413. The processing module 412 is configured to control and manage actions of the first terminal 20. For example, the processing module 412 is configured to support the first terminal 20 in performing steps S101, S106, S121, S127, S121, S122, S123, and S125 in the foregoing embodiment. The communications module 413 is configured to support the first terminal 20 in performing steps S103, S102, S107, S116, S118 (which may be specifically S1181, S1182, S1183, and S1184), S120, S124, and S128 in the foregoing embodiment and/or another process used for a technology described in this specification. The communications module 413 is mainly configured to communicate with a network side device or a second terminal. The first terminal 20 may further include a storage module 411, configured to store program code and data of the first terminal 20.

The processing module 412 may be a processor or controller, for example, the processing module may be a central processing unit, a general-purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 313 may be a transceiver, a transmission/receiving circuit, a communications interface, or the like. The storage module 411 may be a memory.

When the processing module 412 is a processor, the communications module 413 is a communications interface or a transceiver, and the storage module 411 is a memory, the first terminal 20 in this embodiment of the present invention may be the device shown in FIG. 3.

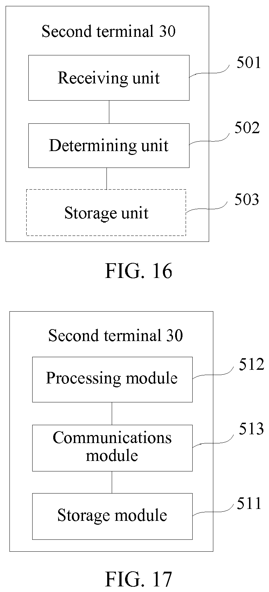

When the functional modules are divided corresponding to the functions, FIG. 16 is a possible schematic structural diagram of the second terminal in the foregoing embodiment. The second terminal 30 includes a receiving unit 501 and a determining unit 502. The receiving unit 501 is configured to support the second terminal 30 in performing steps S104, S108, S117, S119, S126, and S129 in the foregoing embodiment. The determining unit 502 is configured to support the second terminal 30 in performing steps S105, S110, S111, S112, S113, S114, and S115 in the foregoing embodiment. In addition, the second terminal provided in this application further includes a storage unit 503, configured to support the second terminal in performing step S109 in the foregoing embodiment. All related content of the steps in the foregoing method embodiments may be referred for the functional descriptions of the corresponding functional modules. Details are not described herein again.

Based on hardware implementation, in this application, the receiving unit 501 may be a receiver of the second terminal 30. Because the second terminal usually may further include a transmitter, the receiver and the transmitter may be integrated as a transceiver, where specifically, the receiving unit 601 may be the transceiver 202 of the second terminal 30 shown in FIG. 4, the determining unit 502 may be integrated into the processor 201 of the second terminal 30 shown in FIG. 4, and the storage unit 503 may be integrated into the memory of the second terminal 30 shown in FIG. 4.

When an integrated unit is used, FIG. 17 is a possible schematic diagram of a logical structure of the second terminal 30 in the foregoing embodiment. The second terminal 30 includes a processing module 512 and a communications module 513. The processing module 512 is configured to control and manage actions of the second terminal 30. For example, the processing module 512 is configured to support the second terminal 30 in performing steps S105, S110, S111, S112, S113, S114, and S115 in the foregoing embodiment. The communications module 513 is configured to support the second terminal 30 in communicating with a network side device (for example, a base station) or the first terminal 20, for example, support the second terminal 30 in performing steps S104, S108, S117, S119, S126, and S129. The second terminal 30 may further include a storage module 511, configured to store program code and data of the second terminal 30 and perform step S117.

The processing module 512 may be a processor or controller, for example, the processing module may be a central processing unit, a general-purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 513 may be a transceiver, a transmission/receiving circuit, a communications interface, or the like. The storage module 511 may be a memory.

When the processing module 512 is a processor, the communications module 513 is a transceiver, and the storage module 511 is a memory, the second terminal 30 in this embodiment of the present invention may be the device shown in FIG. 4.

Another embodiment of the present invention further provides a computer-readable storage medium. The computer-readable storage medium stores a computer executable instruction. When at least one processor of a first terminal executes the computer executable instruction, the first terminal performs steps S101, S106, S121, S127, S121, S122, S123, S125, S103, S102, S107, S116, S118 (which may be S1181, S1182, S1183, and S1184), S120, S124, and S128 in the foregoing embodiment or other steps performed by the first terminal in the foregoing embodiment.

Another embodiment of the present invention further provides a computer-readable storage medium. The computer-readable storage medium stores a computer executable instruction. When at least one processor of a second terminal executes the computer executable instruction, the second terminal performs steps S104, S108, S117, S119, S126, S129, S105, S110, S111, S112, S113, S114, and S115 (where for a specific execution sequence of the steps, refer to the foregoing embodiment, and details are not further described in this application) and other steps performed by the second terminal in the foregoing embodiment.

Another embodiment of the present invention further provides a computer program product. The computer program product includes a computer executable instruction, and the computer executable instruction is stored in a computer-readable storage medium. At least one processor of a first terminal may read the computer executable instruction from the computer-readable storage medium, and execute the computer executable instruction so that the first terminal performs steps S101, S106, S121, S127, S121, S122, S123, S125, S103, S102, S107, S116, S118 (which may be S1181, S1182, S1183, and S1184), S120, S124, and S128 (where for a specific execution sequence of the steps, refer to the foregoing embodiment, and details are not further described in this application) in the foregoing embodiment or other steps performed by the first terminal in the foregoing embodiment.

Another embodiment of the present invention further provides a computer program product. The computer program product includes a computer executable instruction, and the computer executable instruction is stored in a computer-readable storage medium. At least one processor of a second terminal may read the computer executable instruction from the computer-readable storage medium, and execute the computer executable instruction so that the second terminal performs steps S104, S108, S117, S119, S126, S129, S105, S110, S111, S112, S113, S114, and S115 (where for a specific execution sequence of the steps, refer to the foregoing embodiment, and details are not further described in this application) and other steps performed by the second terminal in the foregoing embodiment.

Another embodiment of the present invention further provides a communications system. The communications system includes a base station, one or more second terminals, and a first terminal. The first terminal uses a structure shown in FIG. 3, FIG. 14, or FIG. 15, and the second terminal uses a structure shown in FIG. 4, FIG. 16, or FIG. 17. The network side device is configured to send a paging message to the first terminal. The first terminal is configured to perform steps S101, S106, S121, S127, S121, S122, S123, S125, S103, S102, S107, S116, S118 (which may be S1181, S1182, S1183, and S1184), S120, S124, and S128 (where for a specific execution sequence of the steps, refer to the foregoing embodiment, and details are not further described in this application) in the foregoing embodiment or other steps performed by the first terminal in the foregoing embodiment. The second terminal is configured to perform steps S104, S108, S117, S119, S126, S129, S105, S110, S111, S112, S113,S114, and S115 (where for a specific execution sequence of the steps, refer to the foregoing embodiment, and details are not further described in this application) and other steps performed by the second terminal in the foregoing embodiment.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the invention as defined by the claims.

## Claims

1. A paging message sending method, comprising:
determining (SI01), by a first terminal (20), that a second terminal (30) is paged, the second terminal (30) being connected to a network side device (10) by using the first terminal (20); and
sending (SI02), by the first terminal (20), a first message to the second terminal (30), wherein the first message is configured to enable the second terminal (30) to determine that the second terminal (30) is paged;
wherein the first message comprises a first identifier, wherein a quantity of bits occupied by the first identifier is less than a respective
quantity of bits occupied by an S-temporary mobile subscriber identity, S-TMSI, and an international mobile subscriber identity, IMSI, that are configured to be used by the network side device (10) for paging the second terminal (30), wherein the first identifier
is configured to enable the second terminal (30) to determine that the second terminal (30) is paged;
wherein the first identifier is an identifier allocated by the first terminal (20) to the second terminal (30) on a time resource for paging the second terminal (30); or
the first identifier is a proximity service terminal identifier, ProSe UE ID, of the second terminal (30);
wherein the first message further comprises a first indication, and the first indication is used to indicate a paging type;
wherein the paging type is that the network side device (10) pages the second terminal (30) by using an S-temporary mobile subscriber identity, S-TMSI, or an international mobile subscriber identity, IMSI.

2. A paging message receiving method, comprising:
receiving (S104), by a second terminal (30), a first message sent by a first terminal (20), the second terminal (30) being connected to a network side device (10) by using the first terminal (20), wherein the first message is configured to enable the second terminal (30) to determine that the second terminal (30) is paged; and
determining (S105), by the second terminal (30) based on the first message, that the second terminal (30) is paged;
wherein the first message comprises a first identifier, wherein a quantity of bits occupied by the first identifier is less than a respective
quantity of bits occupied by an S-temporary mobile subscriber identity, S-TMSI, and an international mobile subscriber identity, IMSI, that are configured to be used by the network side device (10) for paging the second terminal (30), wherein the first identifier is used by the second terminal (30) to determine that the second terminal (30) is paged; and the determining, by the second terminal (30) based on the first message, whether the second terminal (30) is paged comprises: determining, by the second terminal (30), that the second terminal (30) is paged if determining that the first identifier is the same as an identifier of the second terminal (30);
wherein the first identifier is an identifier allocated by the first terminal (20) to the second terminal (30) on a time resource for paging the second terminal (30); or
the first identifier is a proximity service terminal identifier, ProSe UE ID, of the second terminal (30);
wherein the first message further comprises a first indication, and the first indication is configured to indicate a paging type;
wherein the paging type is that a network side device (10) pages the second terminal (30) by using an S-temporary mobile subscriber identity, S-TMSI, or an international mobile subscriber identity, IMSI.

## Patentansprüche

1. Funkrufnachrichtensendeverfahren, umfassend:
Ermitteln (S101), durch ein erstes Endgerät (20), dass ein zweites Endgerät (30) per Funkruf ausgerufen wird, wobei das zweite Endgerät (30) mit einer netzwerkseitigen Vorrichtung (10) verbunden wird, indem das erste Endgerät (20) verwendet wird; und Senden (S102) einer ersten Nachricht von dem ersten Endgerät (20) zu dem zweiten Endgerät (30), wobei die erste Nachricht konfiguriert ist zum Aktivieren eines Ermittelns durch das zweite Endgerät (30), dass das zweite Endgerät (30) per Funkruf ausgerufen wird;
wobei die erste Nachricht eine erste Kennung umfasst, wobei eine Anzahl von Bits, die durch die erste Kennung belegt wird, geringer als eine entsprechende Anzahl von Bits ist, die von einer zeitlich begrenzten S-Mobilfunkteilnehmerkennung (S-Temporary Mobile Subscriber Identity, S-TMSI) und einer internationalen Mobilfunkteilnehmerkennung (International Mobile Subscriber Identity, IMSI) belegt werden, die konfiguriert sind, um durch die netzwerkseitige Vorrichtung (10) zum Aufrufen per Funkruf des zweiten Endgeräts (30) verwendet zu werden, wobei die erste Kennung konfiguriert ist zum Aktivieren eines Ermittelns durch das zweite Endgerät (30), dass das zweite Endgerät (30) per Funkruf ausgerufen wird;
wobei die erste Kennung eine Kennung ist, die von dem ersten Endgerät (20) dem zweiten Endgerät (30) auf einer Zeitressource für einen Funkruf für das zweite Endgerät (30) zugeteilt wird; oder
wobei die erste Kennung eine Endgerätekennung für Nahbereichsdienste (Proximity Service Terminal Identifier, ProSe UE ID) des zweiten Endgeräts (30) ist;
wobei die erste Nachricht außerdem eine erste Anzeige umfasst, und wobei die erste Anzeige verwendet wird, um einen Funkruftyp anzuzeigen;
wobei der Funkruftyp bedeutet, dass die netzwerkseitige Vorrichtung (10) das zweite Endgerät (30) per Funkruf ausruft, indem eine zeitlich begrenzte S-Mobilfunkteilnehmerkennung, S-TMSI, oder eine internationale Mobilfunkteilnehmerkennung, IMSI, verwendet wird.

2. Funkrufnachrichtenempfangsverfahren, umfassend:
Empfangen (S104), in einem zweiten Endgerät (30), einer ersten Nachricht, die von einem ersten Endgerät (20) gesendet wird, wobei das zweite Endgerät (30) mit einer netzwerkseitigen Vorrichtung (10) verbunden wird, indem das erste Endgerät (20) verwendet wird, wobei die erste Nachricht konfiguriert ist zum Aktivieren eines Ermittelns durch das zweite Endgerät (30), dass das zweite Endgerät (30) per Funkruf ausgerufen wird; und
Ermitteln (S105), durch das zweite Endgerät (30) aufgrund der ersten Nachricht, dass das zweite Endgerät (30) per Funkruf ausgerufen wird;
wobei die erste Nachricht eine erste Kennung umfasst, wobei eine Anzahl von Bits, die durch die erste Kennung belegt wird, geringer als eine entsprechende Anzahl von Bits ist, die von einer zeitlich begrenzten S-Mobilfunkteilnehmerkennung (S-Temporary Mobile Subscriber Identity, S-TMSI) und einer internationalen Mobilfunkteilnehmerkennung (International Mobile Subscriber Identity, IMSI) belegt werden, die konfiguriert sind, um durch die netzwerkseitige Vorrichtung (10) zum Aufrufen per Funkruf des zweiten Endgeräts (30) verwendet zu werden, wobei die erste Kennung durch das zweite Endgerät (30) verwendet wird, um zu ermitteln, dass das zweite Endgerät (30) per Funkruf ausgerufen wird; und wobei das Ermitteln, durch das zweite Endgerät (30) aufgrund der ersten Nachricht, ob das zweite Endgerät (30) per Funkruf ausgerufen wird, umfasst: Ermitteln, durch das zweite Endgerät (30), dass das zweite Endgerät (30) per Funkruf ausgerufen wird, wenn ermittelt wird, dass die erste Kennung die gleiche wie eine Kennung des zweiten Endgeräts (30) ist;
wobei die erste Kennung eine Kennung ist, die von dem ersten Endgerät (20) dem zweiten Endgerät (30) auf einer Zeitressource für einen Funkruf für das zweite Endgerät (30) zugeteilt wird; oder
wobei die erste Kennung eine Endgerätekennung für Nahbereichsdienste (Proximity Service Terminal Identifier, ProSe UE ID) des zweiten Endgeräts (30) ist;
wobei die erste Nachricht außerdem eine erste Anzeige umfasst und wobei die erste Anzeige konfiguriert ist zum Anzeigen eines Funkruftyps;
wobei der Funkruftyp bedeutet, dass eine netzwerkseitige Vorrichtung (10) das zweite Endgerät (30) per Funkruf ausruft, indem eine zeitlich begrenzte S-Mobilfunkteilnehmerkennung, S-TMSI, oder eine internationale Mobilfunkteilnehmerkennung, IMSI, verwendet wird.

## Revendications

1. Procédé d'envoi de message de téléavertissement, comprenant :
la détermination (S101), par un premier terminal (20), qu'un second terminal (30) est téléaverti, le second terminal (30) étant connecté à un dispositif côté réseau (10) à l'aide du premier terminal (20) ; et
l'envoi (S102), par le premier terminal (20), d'un premier message au second terminal (30), le premier message étant configuré pour permettre au second terminal (30) de déterminer que le second terminal (30) est téléaverti ;
dans lequel le premier message comprend un premier identifiant, dans lequel une quantité de bits occupée par le premier identifiant est inférieure à une quantité respective de bits occupés par une identité d'abonné mobile temporaire S, S-TMSI, et
une identité internationale d'abonné mobile, IMSI, configurées pour être utilisées par le dispositif côté réseau (10) pour téléavertir le second terminal (30), le premier identifiant étant configuré pour permettre au second terminal (30) de déterminer que le second terminal (30) est téléaverti ;
dans lequel le premier identifiant est un identifiant attribué par le premier terminal (20) au second terminal (30) sur une ressource de temps pour appeler le second terminal (30) ; ou
le premier identifiant est un identifiant de terminal de service de proximité, ProSe UE ID, du second terminal (30) ;
dans lequel le premier message comprend en outre une première indication, et la première indication est utilisée pour indiquer un type de téléavertissement ;
dans lequel le type de téléavertissement est que le dispositif côté réseau (10) téléavertit le second terminal (30) à l'aide d'une identité d'abonné mobile temporaire S, S-TMSI, ou d'une identité internationale d'abonné mobile, IMSI.

2. Procédé de réception de message de téléavertissement, comprenant :
la réception (S104), par un second terminal (30), d'un premier message envoyé par un premier terminal (20), le second terminal (30) étant connecté à un dispositif côté réseau (10) à l'aide du premier terminal (20), le premier message étant configuré pour permettre au second terminal (30) de déterminer que le second terminal (30) est téléaverti ; et
la détermination (S105), par le second terminal (30) en fonction du premier message, que le second terminal (30) est téléaverti ;
dans lequel le premier message comprend un premier identifiant, dans lequel une quantité de bits occupée par le premier identifiant est inférieure à une quantité respective de bits occupés par une identité d'abonné mobile temporaire S, S-TMSI, et une identité internationale d'abonné mobile, IMSI, configurées pour être utilisées par le dispositif côté réseau (10) pour téléavertir le second terminal (30), le premier identifiant étant utilisé par le second terminal (30) pour déterminer que le second terminal (30) est téléaverti ; et la détermination, par le second terminal (30) en fonction du premier message, que le second terminal (30) est téléaverti comprend : la détermination, par le second terminal (30), que le second terminal (30) est téléaverti s'il est déterminé que le premier identifiant est le même qu'un identifiant du second terminal (30) ;
dans lequel le premier identifiant est un identifiant attribué par le premier terminal (20) au second terminal (30) sur une ressource de temps de téléavertissement du second terminal (30) ; ou
le premier identifiant est un identifiant de terminal de service de proximité, ProSe UE ID, du second terminal (30) ;
dans lequel le premier message comprend en outre une première indication, et la première indication est utilisée pour indiquer un type de pagination ;
dans lequel le type de téléavertissement est qu'un dispositif côté réseau (10) téléavertit le second terminal (30) à l'aide d'une identité d'abonné mobile temporaire S, S-TMSI, ou d'une identité internationale d'abonné mobile, IMSI.
